# EUROPEAN PATENT APPLICATION

(11) **EP 4 438 687 A1**
(43) Date of publication of application: **02.10.2024**
(21) Application number: 23749531.2
(22) Date of filing: 19.01.2023
(51) Int. Cl.: C09D 11/324

(54) **INKJET PRINTING INK AND METHOD FOR PRODUCING PRINTED MATTER**

(30) Priority: 01.02.2022 JP 2022014095
(71) Applicant: DIC Corporation, Tokyo 174-8520 (JP)
(72) Inventor: GOUDA, Keigo, Kitaadachi-gun, Saitama 362-8577 (JP); NABE, Takaaki, Kitaadachi-gun, Saitama 362-8577 (JP)
(74) Representative: Kraus & Lederer PartGmbB
(86) International application number: PCT/JP2023/001431
(87) International publication number: WO 2023/149215

(57) **Abstract**

A problem to be solved by the present invention is to provide an ink jet printing ink which can produce a printed matter having a high optical density and excellent rub fastness even when printed on plain paper and which has excellent storage stability and resolubility. The inventors solved the problem by an ink jet printing ink including an aqueous medium, a dispersion (A), and a dispersion (B). The dispersion (A) contains a pigment (a) and a dispersing resin for pigment, and the volume-average particle diameter of the dispersion (A) is 70 nm or more and less than 90 nm. The dispersion (B) contains a self-dispersed pigment (b), and the volume-average particle diameter of the dispersion (B) is 160 nm or more and 210 nm or less. The mass ratio [dispersion (A)/dispersion (B)] between the dispersion (A) and the dispersion (B) is 1.5 to 9.

## Description

### Technical Field

The present invention relates to an ink jet printing ink.

### Background Art

An ink required as an ink used for a printing method of an ink jet recording system has low viscosity, causes little precipitation and aggregation even when not used for a long time, causes little clogging in a head tip portion and an ink flow passage of an ink jet printer, and can produce a printed matter having a high optical density and excellent printing quality when printed on recording media including plain paper.

For example, an ink known as an ink which can be used for printing on plain paper contains as a coloring material a first pigment and a second pigment in a dispersion state in an aqueous medium. The first pigment is a self-dispersed pigment having at least one anionic group bonded to the surface of the first pigment directly or through another atomic group or a self-dispersed pigment having at least one cationic group bonded to the surface of the first pigment directly or through another atomic group. The second pigment is a pigment which can be dispersed in the aqueous medium using a polymer dispersant, and the ink further contains at least one of a polymer dispersant with the same polarity as the group bonded to the surface of the first pigment and an anionic polymer dispersant (refer to, for example, Patent Literature 1).

However, the ink which can produce a printed matter having a high optical density even when plain paper is used often has a pigment concentration of as somewhat high as about 5% by mass, and the ink having such a high pigment concentration may have unsatisfactory storage stability.

Also, with requirement for excellent rub fastness of a printed matter, investigation is performed in which an ink is mixed with a binder resin capable of improving rub fastness.

However, an ink having a high pigment concentration is hardly mixed with a large amount of binder resin capable of improving rub fastness, and even if a large amount of binder resin can be mixed, the optical density of the printed matter may be decreased or clogging of ink ejection nozzles may be caused (decrease in resolubility).

### Citation List

### Patent Literature

PTL 1: Japanese Unexamined Patent Application Publication No. 2000-239589

### Summary of Invention

### Technical Problem

A problem to be solved by the present invention is to provide an ink jet printing ink which can produce a printed matter having a high optical density and excellent rub fastness even when printed on plain paper and which has excellent storage stability and resolubility.

### Solution to Problem

The inventors solved the problem by an ink jet printing ink containing an aqueous medium, a dispersion (A), and a dispersion (B), in which the dispersion (A) contains a pigment (a) and a dispersing resin for pigment, the volume-average particle diameter of the dispersion (A) is 70 nm or more and less than 90 nm, the dispersion (B) contains a self-dispersed pigment (b), and the volume-average particle diameter of the dispersion (B) is 160 nm or more and 210 nm or less. The mass ratio [dispersion (A)/dispersion (B)] between the dispersion (A) and the dispersion (B) is 1.5 to 9.

### Advantageous Effects of Invention

An ink jet printing ink of the present invention has excellent storage stability and resolubility and can produce a printed matter having a high optical density and excellent rub fastness when used for printing on plain paper. Description of Embodiments

An ink jet printing ink of the present invention contains an aqueous medium, a dispersion (A), and a dispersion (B), in which the dispersion (A) contains a pigment (a) and a dispersing resin for pigment, the volume-average particle diameter of the dispersion (A) is 70 nm or more and less than 90 nm, the dispersion (B) contains a self-dispersed pigment (b), and the volume-average particle diameter of the dispersion (B) is 160 nm or more and 210 nm or less. The mass ratio [dispersion (A)/dispersion (B)] between the dispersion (A) and the dispersion (B) is 1.5 to 9. The ink jet printing ink has excellent storage stability and resolubility even at a high pigment concentration and can produce a printed matter having a high optical density and excellent rub fastness by using for printing on plain paper.

The ink jet printing ink of the present invention contains the dispersion (A) and the dispersion (B). The dispersion (A) contains the pigment (a) and the dispersing resin for pigment, and the volume-average particle diameter of the dispersion (A) is 70 nm or more and less than 90 nm.

A dispersion containing the pigment (a) and the dispersing resin for pigment is used as the dispersion (A). Specifically, a dispersion used as the dispersion (A) is imparted with dispersibility in the aqueous medium by adsorption of the dispersing resin for pigment to the surface of the pigment (a), wrapping of the pigment (a) with the dispersing resin for pigment, or the like. Unlike the self-dispersed pigment (b) described later, the dispersing resin for pigment is required for stably dispersing the pigment (a) in the aqueous medium.

A dispersion used as the dispersion (A) has a volume-average particle diameter of 70 nm or more and less than 90 nm and preferably 80 nm or more and less than 90 nm. In this case, when a dispersion having a volume-average particle diameter out of the range described above is used in place of the dispersion (A) in combination with the dispersion (B) described later, the ink jet printing ink may cause a decrease in storage stability and resolubility and produce a printed matter having a low optical density and unsatisfactory rub fastness when printed on plain paper.

The present invention uses the ink jet printing ink containing the dispersion (A) having the volume-average particle diameter within the range described above in combination with the dispersion (B), and thus the present invention exhibits excellent storage stability and resolubility even at a high pigment concentration and can produce a printed matter having a high optical density and excellent rub fastness by using for printing on plain paper.

As described in examples in the present specification, the volume-average particle diameter is measured three times by detecting scattered light of laser light in an atmosphere of 25°C using Nanotrac particle size distribution analyzer "UPA150" manufactured by Microtrac-BEL Corp., and an average value is calculated and the average value is rounded off to the nearest whole number, obtaining a value as a volume-average particle diameter value (unit: nm) as a matter specifying the present invention.

For example, when a black ink is produced, carbon black can be used as the pigment (a), and usable examples thereof include #2600 series, #2300 series, #1000 series, #900 series, #600 series, #90 series, and MA series which are manufactured by Mitsubishi Chemical Corporation, COLOR-BLACK series, SPESIAL-BLACK series, PRINTEX series, HIBLACK series, NEROX series, and NIPex series which are manufactured by Orion Engineered Carbons Inc., SUNBLACK series, #70 series, and #80 series which are manufactured by Asahi Carbon Co., Ltd., TOKABLACK #7000 series and #8000 series which are manufactured by Tokai Carbon Co., Ltd., and the like.

Among these, acid carbon black is preferably used as the carbon black because when used for printing on plain paper, it can produce a printed matter having a high optical density and can be easily dispersed in an aqueous medium. For example, carbon black with a pH of 4.5 or less is preferably used as the acid carbon black, and examples thereof include MA series, #900 series, and #2300 series which are manufactured by Mitsubishi Chemical Corporation, NEROX 600 and NIPex 160IQ which are manufactured by Orion Engineered Carbons Inc., SUNBLACK-X series manufactured by Asahi Carbon Co., Ltd., and the like.

Examples of a pigment used for a yellow ink include C. I. Pigment Yellow 1, 2, 12, 13, 14, 16, 17, 73, 74, 75, 83, 93, 95, 97, 98, 109, 110, 114, 120, 128, 129, 138, 150, 151, 154, 155, 174, 180, 185, and the like.

Examples of a pigment used for a magenta ink include C. I. Pigment Red 5, 7, 12, 48(Ca), 48(Mn), 57(Ca), 57:1, 112, 122, 123, 146, 168, 176, 184, 185, 202, 209, and the like.

Examples of a pigment used for a cyan ink include C. I. Pigment Blue 1, 2, 3, 15, 15:3, 15:4, 16, 22, 60, 63, 66, and the like.

A pigment having a primary particle diameter within a range of 10 nm to 30 nm is preferably used as the pigment (a), and a pigment having a primary particle diameter within a range of 15 nm to 25 nm is more preferably used for obtaining a printed matter having high gloss when printed on photo paper (photographic paper).

The primary particle diameter (nm) of the pigment (a) and the self-dispersed pigment (b) described in the present invention are values determined as described below. First, an aqueous pigment composition at a pigment concentration of 1% by mass containing the pigment (a) or the self-dispersed pigment (b) was dropped on a mesh with a collodion film and then dried. The surface of the dried material was observed using STEM (scanning transmission electron microscope) (JSM-7500FA manufactured by JEOL Ltd.). The acceleration voltage was 30 kV, and the observation magnification was set to be magnification for easy observation according to the sample to be observed within a magnification range of 5000 times to 200,000 times. Based on the image observed by the method described above, the particle diameter (primary particle diameter) of the minimum unit forming the pigment (a) and the self-dispersed pigment (b) was measured at 100 points and averaged to obtain a value as the primary particle diameter D (nm) described in the present invention.

Usable examples of the dispersing resin for pigment used for dispersing the pigment (a) in the aqueous medium include an anionic group-containing polyvinyl-based resin, an anionic group-containing polyester-based resin, an anionic group-containing amino-based resin, an anionic group-containing acrylic-based resin, an anionic group-containing epoxy-based resin, an anionic group-containing polyurethane-based resin, an anionic group-containing polyether-based resin, an anionic group-containing polyamide-based resin, an anionic group-containing unsaturated polyester-based resin, an anionic group-containing phenol-based resin, an anionic group-containing silicone-based resin, an anionic group-containing fluorine-based resin, and the like.

Among these, an anionic group-containing acrylic-based resin and an anionic group-containing polyurethane-based resin are preferably used as the dispersing resin for pigment for facilitating adsorption on the pigment (a) and obtaining an ink jet printing ink having more excellent dispersion stability.

For example, a resin obtained by polymerizing monomer components containing an anionic group-containing monomer and, if required, another unsaturated ethylene monomer can be used as the anionic group-containing acrylic-based resin. Specifically, a styrene-(meth)acrylic acid copolymer, a styrene-(meth)acrylate ester-(meth)acrylic acid copolymer, a (meth)acrylate ester-(meth)acrylic acid copolymer, and the like are preferably used as the anionic group-containing resin.

Usable examples of the anionic group-containing monomer which can be used for producing the anionic group-containing acrylic-based resin include acrylic acid and methacrylic acid, and these can be used alone or in combination of two or more.

A polymer produced by polymerizing styrene, acrylic acid, and methacrylic acid is preferably used as the anionic group-containing acrylic-based resin in order to obtain an ink jet printing ink having excellent dispersion stability and storage stability.

Examples of the other unsaturated ethylene monomer which can be used for producing the anionic group-containing acrylic-based resin include styrene-based monomers such as styrene, alkylstyrenes such as α-methylstyrene, β-methylstyrene, 2,4-dimethylstyrene, α-ethylstyrene, α-butylstyrene, α-hexylstyrene, and the like, halogenated styrene such as 4-chlorostyrene, 3-cshlorotyrene, 3-bromostyrene, and the like, 3-nitrostyrene, 4-methoxystyrene, vinyltoluene, and the like, and (meth)acrylate ester monomers having an aromatic cyclic structure, such as benzyl (meth)acrylate, phenyl (meth)acrylate, phenylethyl (meth)acrylate, phenylpropyl (meth)acrylate, phenoxyethyl (meth)acrylate, and the like.

Among these, styrene, α-methylstyrene, and tert-butylstyrene are particularly preferably used as the unsaturated ethylene monomer.

Usable examples other than the above of the unsaturated ethylene monomer include acrylate esters and methacrylate esters such as methyl acrylate, methyl methacrylate, n-propyl acrylate, isopropyl acrylate, n-butyl acrylate, sec-butyl acrylate, tert-butyl acrylate, 2-ethylbutyl acrylate, 1,3-dimethylbutyl acrylate, hexyl acrylate, 2-ethylhexyl acrylate, octyl acrylate, ethyl methacrylate, n-butyl methacrylate, 2-methylbutyl methacrylate, pentyl methacrylate, heptyl methacrylate, nonyl methacrylate, and the like; acrylate ester derivatives and methacrylate ester derivatives such as 3-ethoxypropyl acrylate, 3-ehtoxybutyl acrylate, dimethyl aminoethyl acrylate, 2-hydroxyethyl acrylate, 2-hydroxybutyl acrylate, ethyl α-(hydroxymethyl) acrylate, dimethylaminoethyl methacrylate, hydroxyethyl methacrylate, hydroxypropyl methacrylate, glycidyl (meth)acrylate, and the like; acrylic acid aryl esters and acrylic acid aralkyl esters such as phenyl acrylate, benzyl acrylate, phenylethyl acrylate, phenylethyl methacrylate, and the like; monoacrylate esters or monomethacylate esters of polyhydric alcohols such as diethylene glycol, triethylene glycol, polyethylene glycol, glycerin, bisphenol A, and the like; maleic acid dialkyl esters such as dimethyl maleate, diethyl maleate, and the like; vinyl acetate; and the like.

A polymer (linear polymer) of a monomer having an ethylenically unsaturated group or a polymer of a monomer having an ethylenically unsaturated group and a monomer having two or more ethylenically unsaturated groups can be used as the dispersing resin for pigment.

Usable examples of the monomer having two or more ethylenically unsaturated groups include divinyl benzene, polyhydric alcohol poly(meth)acrylates such as ethylene glycol di(meth)acrylate, propylene glycol di(meth)acrylate, polyethylene glycol di(meth)acrylate, poly(oxyethylene oxypropylene) glycol di(meth)acrylate, glycerin alkylene oxide-adduct tri(meth)acrylate, and the like.

When the styrene-acrylic acid-based copolymer is used as the dispersing resin for pigment, the ratio of styrene used to the total amount of monomer components used for producing the copolymer is more preferably 50% by mass to 90% by mass and particularly preferably 70% by mass to 90% by mass in order to make it easy to adjust the volume-average particle diameter of the dispersion (A) within the range described above, and consequently to obtain an ink jet printing ink which has excellent storage stability and resolubility even at a high pigment concentration and which can produce a printed matter having a high optical density and excellent rub fastness when used for printing on plain paper.

When the styrene-acrylic acid-based copolymer is used as the dispersing resin for pigment, the ratio of the total mass of the styrene, acrylic acid, and methacrylic acid to the total amount of the monomer components used for producing the copolymer is preferably 80% by mass or more and preferably 95% by mass to 100% by mass in order to impart more excellent dispersion stability to the pigment(a).

For example, when the anionic group-containing acrylic-based resin is used, usable examples of a method for producing the dispersing resin for pigment include a bulk polymerization method, a solution polymerization method, a suspension polymerization method, an emulsion polymerization method, and the like. If required, a polymerization catalyst, a chain transfer agent (polymerization degree adjuster), a surfactant, a defoaming agent, etc. can be used for producing the dispersing resin for pigment.

Usable examples of the polymerization catalyst include 2,2'-azobis(2,4-dimethylvaleronitrile), 2,2'-azobisisobutyronitrile, 1,1'-azobis(cyclohexane-1-carbonitrile), benzoyl peroxide, dibutyl peroxide, butyl peroxybenzoate, and the like. The polymerization catalyst is preferably used within a range of 0.1% by mass to 10.0% by mass relative to the total amount of the monomer components used for producing the anionic group-containing acrylic-based resin.

The dispersing resin for pigment used is preferably one having a weight-average molecular weight within a range of 6000 to 25000, more preferably within a range of 6000 to 20000, and particularly preferably within a range of 6000 to 15000 in order to enable to suppress an increase in viscosity of the aqueous pigment dispersion of the present invention and to impart more excellent dispersion stability and storage stability. The weight-average molecular weight is a value measured by a GPC (gel permeation chromatography) method and a value in terms of molecular weight of polystyrene used as a standard material.

The dispersing resin for pigment used is preferably one having an acid value of 50 to 220 (mgKOH/g), more preferably 70 to 200 (mgKOH/g), and preferably 80 to 180 (mgKOH/g) in order to obtain excellent dispersion stability of the dispersion (A) and excellent storage stability and resolubility of an ink jet printing ink and to produce a printed matter having a high optical density and excellent rub fastness when printed on plain paper.

The acid value is a numerical value measured according to Japanese Industrial Standards "K0070: 1992, Test methods for acid value, saponification value, ester value, iodine value, hydroxyl value, and unsaponifiable matter of chemical products", and represents an amount (mg) of potassium hydroxide necessary for completely neutralizing 1 g of resin.

When a dispersing resin for pigment having an anionic group such as a carboxyl group or the like is used as the dispersing resin for pigment, the anionic group is preferably neutralized by a basic compound.

Usable examples of the basic compound include inorganic basic compounds such as hydroxides of alkali metals such as potassium, sodium, and the like; carbonate salts of alkali metals such as potassium, sodium, and the like; carbonate salts of alkaline-earth metals such as calcium, barium, and the like; ammonium hydroxide and the like; and organic basic compounds such as aminoalcohols such as triethanolamine, N,N-dimethanolamine, N-aminoethylethanolamine, dimethylethanolamine, N-N-butyldiethanolamine, and the like; morpholines such as morpholine, N-methylmorpholine, N-ethylmorpholine, and the like; piperazine such as N-(2-hydroxyethyl)piperazine, piperazine hexahydrate, and the like. Among these, alkali metal hydroxides represented by potassium hydroxide, sodium hydroxide, and lithium hydroxide are more preferably used as the basic compound in order to enable to suppress an increase in viscosity of an ink jet printing ink and an aqueous pigment dispersion used for producing the ink, and potassium hydroxide is more preferably used in order to obtain an ink jet printing ink having excellent ejection stability.

A dispersion (that is, a dispersion containing the dispersion (A) dispersed in the aqueous medium) containing the pigment (a) previously dispersed in the aqueous medium using the dispersing resin for pigment is preferably used as the dispersion (A) as a raw material for producing the ink jet printing ink of the present invention in order to obtain an ink jet printing ink in which the volume-average particle diameter of the dispersion (A) can be easily controlled within the range described above, which has excellent dispersion stability and excellent storage stability and resolubility even at a high pigment concentration, and which can be used for producing a printed matter having a high optical density and excellent rub fastness when used for printing on plain paper.

The dispersion (A) in the dispersion is preferably the dispersion (A) in a state where the dispersing resin for pigment is adsorbed on the surface of the pigment (a) or a state where the pigment (a) is wrapped with the dispersing resin for pigment.

Next, the dispersion (B) used in the present invention is described.

A dispersion containing the self-dispersed pigment (b) and having a volume-average particle diameter of 160 nm or more and 210 nm or less is used as the dispersion (B).

A dispersion having a volume-average particle diameter of 160 nm or more and 210 nm or less and preferably within a range of 160 nm or more and less than 190 nm is used as the dispersion (B).

The problem described above cannot be solved by the ink jet printing ink containing simply one of the dispersion (A) and the dispersion (B). The use of the ink jet printing ink containing combination of the dispersion (A) and the dispersion (B) can exhibit excellent storage stability and resolubility even at a high pigment concentration and can produce a printed matter having a high optical density and excellent rub fastness when used for printing on plain paper.

The self-dispersed pigment (b) constituting the dispersion (B) has good dispersibility in the aqueous medium and thus need not use such a dispersing resin for pigment that used in the dispersion (A). A pigment, in which a functional group capable of imparting water dispersibility to the surface of the pigment is introduced, can be used as the self-dispersed pigment (b). For example, when the self-dispersed pigment (b) is a self-dispersible black pigment, examples thereof include carbon black in which at least one functional group selected from the group consisting of a carbonyl group, a carboxyl group, a hydroxyl group, a sulfone group, and salts of these functional groups is bonded to the surface thereof.

For example, when the self-dispersed pigment (b) used in the present invention is a black pigment, self-dispersible carbon black can be used, and any one of furnace black, lamp black, acetylene black, channel black, and the like can be used.

Usable examples of the self-dispersible carbon black include commercial products such as Raven 7000, Raven 5750, Raven 5250, Raven 5000 ULTRA, Raven 3500, Raven 2000, Raven 1500, Raven 1250, Raven 1200, Raven 1190 ULTRA-II, Raven 1170, and Raven 1255 (the above manufactured by Columbia Co., Ltd.), Black Pearls L, Regal 400R, Regal 330R, Regal 660R, Mogul L, Monarch 700, Monarch 800, Monarch 880, Monarch 900, Monarch 1000, Monarch 1100, Monarch 1300, Monarch 1400, Monarch 2000, and Vulcan XC-72R (the above manufactured by Cabot Corporation), Color Black FW1, Color Black FW2, Color Black FW2V, Color Black FW18, Color Black FW200, Color Black S150, Color Black S160, Color Black S170, Printex 35, Printex U, Printex V, Printex 140U, Printex 140V, Special Black 6, Special Black 5, Special Black 4A, and Special Black 4 (the above manufactured by Degussa Co., Ltd.), No. 25, No. 33, No. 40, No. 47, No. 52, No. 900, No. 960, No. 2300, MCF-88, MA600, MA7, MA8, MA14, MA77, MA100, and MA220 (the above manufactured by Mitsubishi Chemical Corporation), and the like.

A pigment having a primary particle diameter within a range of 10 nm to 30 nm is preferably used as the self-dispersed pigment (b), and a pigment having a primary particle diameter within a range of 15 nm to 30 nm is particularly preferably used in order to obtain an ink jet printing ink which has excellent storage stability and resolubility even at a high pigment concentration and which can produce a printed matter having a high optical density and excellent rub fastness when used for printing on plain paper.

Usable examples of the dispersion (B) containing the self-dispersed pigment (b) include "CAB-O-JET200", "CAB-O-JET250C", "CAB-O-JET260M", "CAB-O-JET270Y", "CAB-O-JET300", "CAB-O-JET400", "CAB-O-JET450C", "CAB-O-JET465M", and "CAB-O-JET470Y" which are manufactured by Cabot Specialty Chemicals, Inc.; "BONJET BLACK CW-2" and "BONJET BLACK CW-3" which are manufactured by Orient Chemical Industries Co., Ltd.; "LIOJET WD BLACK 002C" manufactured by Toyo Ink SC Holdings Company; and the like.

A dispersion prepared by previously dissolving the dispersion (B) in an aqueous medium can be used as the dispersion (B), and usable examples thereof include "SENSIJJET Black SDP100", "SENSIJJET Black SDP1000", "SENSIJJET Black SDP2000", "Sensijet Ultra Yellow PY74", "Sensijet Ultra Magenta PR122", "Sensijet Ultra Cyan PB15:4", "Sensijet Ultra K", and the like which are manufactured by US Sensient Colors Corporation.

The self-dispersed pigment (b) can be produced by, for example, introducing a functional group, which can impart water dispersibility, into the surface of a pigment. Examples of a method for introducing the functional group include a method using ammonium peroxodisulfate, hydrogen peroxide, ozone, oxygen (pure oxygen or air containing oxygen), potassium bromate, sodium perborate, or the like.

A dispersion (that is, a dispersion containing the dispersion (B) dispersed in the aqueous medium) prepared by preciously dispersing the self-dispersed pigment (b) in the aqueous medium is preferably used as a raw material for producing the aqueous pigment dispersion of the present invention.

Next, a method for producing the aqueous pigment dispersion of the present invention is described.

The aqueous pigment dispersion can be produced by, for example, separately producing the dispersion (A) and the dispersion (B) and then supplying and mixing these dispersions in the aqueous medium.

Also, the aqueous pigment dispersion can be produced by, for example, mixing a dispersion prepared by dispersing the dispersion (A), containing the pigment (a) and the dispersing resin for pigment, and the dispersion (B) containing the self-dispersed pigment (b) or a dispersion prepared by dispersing the dispersion (B) in the aqueous medium. In producing the aqueous pigment dispersion, if required, foreign materials may be removed by filtration treatment or the like after mixing.

First, described is a method for producing the dispersion containing the dispersion (A) dispersed in the aqueous medium.

The dispersion in which the dispersion (A), containing the pigment (a) and the dispersing resin for pigment, is dispersed in the aqueous medium can be produced through, for example, a step of kneading a mixture containing the pigment (a), the dispersing resin for pigment, the basic compound, and if required, the aqueous medium to prepare a kneaded material, and a step of mixing the kneaded material and the aqueous medium, etc.

The mixture can be produced by mixing the pigment (a) and the dispersing resin for pigment and, if required, the basic compound, a wetting agent, and water. The mixture is preferably produced by previously mixing the pigment (a) and the powdery dispersing resin for pigment, and then, if required, mixing the basic compound, the wetting agent, and water in order to satisfy both the excellent dispersion stability of the dispersion (A) and excellent storage stability of the aqueous pigment dispersion.

In the mixture, the total mass of the pigment (a) and the dispersing resin for pigment relative to the total amount of the mixture is preferably within a range of 50% by mass to 80% by mass and more preferably within a range of 60% by mass to 80% by mass.

Also, a mixture having a mass ratio (mass of dispersing resin for pigment/mass of pigment (a)) of 1.0 or less between the pigment (a) and the dispersing resin for pigment is preferably used as the mixture, a mixture having a mass ratio of 0.5 or less is more preferably used, and a mixture having a mass ratio of 0.4 or less is more preferably used because the primary particle diameter of the dispersion (A) can be adjusted within the range described above and an ink jetting defect over time hardly occurs when used for producing an ink jet recording ink.

A method for kneading the mixture is, for example, a method using a pressure kneader, a Henschel mixer, or a planetary mixer, and a pressure kneader or planetary mixer is preferably used in order to satisfy both the excellent dispersion stability of the dispersion (A) and the excellent storage stability of the aqueous pigment dispersion.

A method for mixing the kneaded material obtained through the kneading step and the aqueous medium and the like is, for example, a method of supplying the aqueous medium to the kneaded material and stirring the resultant mixture. The mixing method is, for example, a method of repeatedly supplying and stirring the aqueous medium and the like to the kneaded material obtained through the kneading step and preferably having a solid content concentration of 50% by mass to 80% by mass.

A dispersion having a solid content concentration of 20% by mass to 35% by mass can be used as the dispersion obtained by the method described above and containing the dispersion (A) dispersed in the aqueous medium.

When coarse particles of the dispersion (A) are contained in the dispersion containing the dispersion (A) dispersed in the aqueous medium, if required, the coarse particles are preferably removed by centrifugal separation treatment or filtration treatment in order to obtain an ink which can suppress the occurrence of ink clogging in ink ejection nozzles and which can be used for producing a printed matter having higher gloss when printed on photo paper (photographic paper).

Next, described is a method for producing the dispersion containing the dispersion (B) dispersed in the aqueous medium.

The dispersion containing the dispersion (B), containing the self-dispersed pigment (b), dispersed in the aqueous medium can be produced by, for example, mixing the self-dispersed pigment (b) and the aqueous medium. The mixing can be performed by, if required, a media-less dispersion method.

Examples of the media-less dispersion method include an ultrasonic dispersion method, a dispersion method using a high-speed disk impeller, a colloid mill, a roll mill, a high-pressure homogenizer, Nanomizer, Altimizer, or the like, and the like. The ultrasonic dispersion method is described in detail below.

First, the self-dispersed pigment (b) and the aqueous medium are previously mixed and stirred, producing a mixture.

The mixture preferably has proper fluidity in order to make it easy to produce an ink by diluting with an aqueous medium, and the viscosity is preferably within a range of 0.1 mPa·s to 100 mPa·s and most preferably within a range of 0.5 mPa·s to 10 mPa·s.

A mixture containing the self-dispersed pigment (b) at a concentration of 5% by mass to 30% by mass relative to the total amount of the mixture is preferably used as the mixture, and a mixture at a concentration of 10% by mass to 20% by mass is more preferably used.

Next, the resultant mixture is irradiated with ultrasonic waves.

The irradiation conditions for ultrasonic waves are not particularly limited, but irradiation is preferably performed with an output of 200 W to 3000 W and a frequency of 15 kHz to 40 kHz, and more preferably performed with an output of 500 W to 2000 W and a frequency of 15 kHz to 25 kHz.

The time of ultrasonic wave irradiation is suitable such as to supply an electric energy of 0.5 W/g to 2.0 W/g to the mass of the self-dispersed pigment (b) contained in the dispersion in which the dispersion (B) is dispersed in the aqueous medium.

When coarse particles of the dispersion (B) are contained in the dispersion containing the dispersion (B) dispersed in the aqueous medium, if required, the coarse particles are preferably removed by centrifugal separation treatment or filtration treatment in order to obtain an ink which can suppress the occurrence of ink clogging in ink ejection nozzles and can be used for producing a printed matter having higher gloss when printed on photo paper (photographic paper).

A dispersion containing, if required, the anionic group-containing resin, the basic compound, etc. is preferably used as the dispersion containing the dispersion (B) dispersed in the aqueous medium in order to more improve the excellent dispersion stability of the dispersion (B) and the ink adhesion to a recording medium and rub fastness of a printed matter, and the like. Specifically, a dispersion which can be used as the dispersion is obtained by previously preparing a composition containing the anionic group-containing resin, the basic compound, and water, and then supplying and mixing the resultant composition to the dispersion.

The composition is preferably added to the dispersion previously produced. This can effectively suppress aggregation of the dispersion (B) or the like and can impart more excellent storage stability to the aqueous pigment dispersion.

For example, when acid carbon black, which is the self-dispersed pigment (b), is used in the dispersion (B), and when the acid carbon black and the anionic group-containing resin, etc. are mixed at a time, aggregation may easily occur due to an acid derived from the carbon black and the anionic group possessed by the resin. Therefore, the composition containing the anionic group-containing resin etc. is preferably supplied and mixed with the dispersion prepared by previously dispersing the acidic carbon in the aqueous medium.

Usable examples of the anionic group-containing resin include an anionic group-containing polyvinyl-based resin, an anionic group-containing polyester-based resin, an anionic group-containing amino-based resin, an anionic group-containing acrylic-based copolymer, an anionic group-containing epoxy-based resin, an anionic group-containing polyurethane-based resin, an anionic group-containing polyether-based resin, an anionic group-containing polyamide-based resin, an anionic group-containing unsaturated polyester-based resin, an anionic group-containing phenol-based resin, an anionic group-containing silicone-based resin, an anionic group-containing fluorine-based polymer compound, and the like. An anionic group-containing acrylic-based copolymer and an anionic group-containing polyurethane-based resin are preferably used because of abundance of raw materials, the ease of design, and the excellent pigment dispersing function.

The anionic group-containing resin is preferably used within a range of 0.2 parts by mass to 1.0 part by mass relative to 1 part by mass of the self-dispersed pigment (b) .

The aqueous pigment dispersion used in the present invention and produced by the method described above is preferably one having a solid content within a range of 15% by mass to 30% by mass and a pigment concentration of 10% by mass to 20% by mass in order to maintain more excellent storage stability.

Next, a method for producing the ink jet printing ink of the present invention is described.

The ink jet printing ink of the present invention can be produced by previously producing the aqueous pigment dispersion containing the aqueous medium, the dispersion (A), and the dispersion (B), and then, if required, mixing a solvent such as a water-soluble organic solvent, water, or the like, a resin serving as a binder such as an acrylic resin, a polyurethane resin or the like, and additives such as a drying preventive agent, a penetrant, a surfactant, a preservative, a viscosity modifier, a pH adjuster, a chelating agent, a plasticizer, an antioxidant, an ultraviolet absorber, etc. The ink jet printing ink of the present invention may be treated by centrifugal separation or filtration after produced by the method described above.

The aqueous pigment dispersion used for producing the ink jet printing ink can be produced by, for example, a method of producing an aqueous pigment dispersion containing the dispersion (A) and the aqueous medium and an aqueous pigment dispersion containing the dispersion (B) and the aqueous medium and then mixing them, a method of supplying and mixing the self-dispersed pigment (b) as the dispersion (B) to an aqueous pigment dispersion containing the dispersion (A) and the aqueous medium, or the like.

Examples of additives which can be used for producing the ink jet printing ink include a water-soluble organic solvent. The water-soluble organic solvent can be used for preventing drying of the ink and adjusting the viscosity and concentration of the ink jet printing ink within respective proper ranges.

In order to enhance the permeability of the ink jet printing ink to a recording medium, examples of the water-soluble organic solvent include lower alcohols such as ethanol, isopropyl alcohol, and the like; alkyl alcohol ethylene oxide adducts such as ethylene glycol hexyl ether, diethylene glycol butyl ether, and the like; alkyl alcohol propylene glycol adducts such as propylene glycol propyl ether and the like; and the like.

Examples of the drying preventive agent include glycerin, ethylene glycol, diethylene glycol, triethylene glycol, triethylene glycol mono-n-butyl ether, polyethylene glycol having a molecular weight of 2000 or less, propylene glycol, dipropylene glycol, tripropylene glycol, 1,3-propylene glycol, isopropylene glycol, isobutylene glycol, 1,4-butanediol, 1,3-butaneiol, 1,5-poentanediol, 1,6-hexanediol, mesoerythritol, pentaerythritol, and the like. Among these, the use of glycerin or triethylene glycol as the drying preventive agent can produce the ink jet printing ink having stability and being hardly dried and excellent in ejection performance.

The same compound as the water-soluble organic solvent can be used as the drying preventive agent.

The penetrant can be used for the purpose of improving permeability to a recording medium and adjusting the dot diameter on the recording medium.

Examples of the penetrant include lower alcohols such as ethanol, isopropyl alcohol, and the like; and alkyl alcohol glycol monoethers such as ethylene glycol hexyl ether, diethylene glycol butyl ether, propylene glycol propyl ether, and the like. The content of the penetrant in the ink is preferably 0.01% by mass to 10% by mass.

The surfactant can be used for adjusting the ink characteristics such as surface tension and the like. Examples of the surfactant include, but are not particularly limited to, various anionic surfactants, nonionic surfactants, cationic surfactants, and amphoteric surfactants. Among these, anionic surfactants and nonionic surfactants are preferred.

Examples of the anionic surfactants include an alkylbenzene sulfonate salt, an alkylphenyl sulfonate salt, an alkylnaphthalene sulfonate salt, a higher fatty acid salt, a sulfate ester salt of a higher fatty acid ester, a sulfonate ester salt of a higher fatty acid ester, a sulfonate ester salt and sulfonate salt of higher alcohol ether, a higher alkyl sulfosuccinate salt, a polyoxyethylene alkyl ether carboxylate salt, a polyoxyethylene alkyl ether sulfate salt, an alkyl phosphate salt, a polyoxyethylene alkyl ether phosphate salt, and the like. Specific examples thereof include a dodecylbenzene sulfonate salt, an isopropylnaphthalene sulfonate salt, a monobutylphenyl phenol monosulfonate salt, a monobutylbiphenyl sulfonate salt, a dibutylphenyl phenol disulfonate salt, and the like.

Examples of the nonionic surfactants include a polyoxyethylene alkyl ether, a polyoxyethylene alkylphenyl ether, a polyoxyethylene fatty acid ester, a sorbitan fatty acid ester, a polyoxyethylene sorbitan fatty acid ester, a polyoxyethylene sorbitol fatty acid ester, a glycerin fatty acid ester, a polyoxyethylene glycerin fatty acid ester, a polyglycerin fatty acid ester, a sucrose fatty acid ester, a polyoxyethylene alkylamine, a polyoxyethylene fatty acid amide, a fatty acid alkylolamide, an alkylalkanolamide, acetylene glycol, an acetylene glycol oxyethylene adduct, polyethylene glycol/polypropylene glycol block copolymer and the like. Among these, preferred are polyoxyethylene nonylphenyl ether, polyoxyethylene octyl phenyl ether, polyoxyethylene dodecyl phenyl ether, polyoxyethylene alkyl ether, polyoxyethylene fatty acid ester, sorbitan fatty acid ester, polyoxyethylene sorbitan fatty acid ester, fatty acid alkylolamide, acetylene glycol, an acetylene glycol oxyethylene adduct, and a polyethylene glycol/polypropylene glycol block copolymer.

Usable examples of other surfactants include silicone-based surfactants such as a polysiloxane oxyethylene adduct and the like; fluorine-based surfactants such as a perfluoroalkyl carboxylate salt, a perfluoroalkyl sulfonate salt, oxyethylene perfluoroalkyl ether, and the like; biosurfactants such as spiculisporic acid, rhamnolipid, and lysolecithin; and the like.

The surfactants can be used alone or in combination of two or more. The amount of the surfactant used relative to total mass of the ink is preferably within a range of 0.001% by mass to 2% by mass, more preferably within a range of 0.001% by mass to 1.5% by mass, and still more preferably within a range of 0.01% by mass to 1% by mass in order to more effectively prevent bleeding of a printed image and the like.

In producing the ink jet printing ink, a binder is preferably used for producing a printed matter having excellent rub fastness. In the present invention, even when an ink jet printing ink having a relatively high pigment concentration is used for obtaining a printed matter having a high optical density even when printed on plain paper, a printed matter which suppresses a decrease in the optical density and has excellent rub fastness can be produced.

A resin such as an acrylic-based, a polyurethane resin, or the like can be used as the binder. In particular, an acrylic-based resin is preferably used as the binder, a polymer of styrene and (meth)acrylic acid is more preferably used, and a polymer of styrene, acrylic acid, and methacrylic acid is preferably used for exhibiting printing quality from the viewpoint of mottling and gloss.

Also, a polyolefin resin can be used as the binder.

An acid-modified polypropylene resin is a resin obtained by modifying polypropylene with one or two or more acidic compounds and has a skeleton (polypropylene skeleton) derived from polypropylene and a functional group derived from the acidic compound. The polypropylene skeleton has a structural unit mainly derived from propylene.

The polypropylene skeleton may be a homo polypropylene (propylene homopolymer) skeleton, a block polypropylene (block copolymer of propylene and another olefin (for example, ethylene)) skeleton, or a random polypropylene (random copolymer of propylene and another olefin (for example, ethylene)) skeleton. Examples of another olefin include alkenes such as ethylene, isobutylene, 1-butiee, 1-pentene, 1-hexene, and the like. These components may be either liner or branched. The number of carbons of the other olefin component is, for example, 2 to 6.

The content of the propylene component (content of the structural unit derived from propylene) in the polypropylene skeleton is, for example, 60 mol% or more and may be 70 mol% or more. When the polypropylene skeleton is a block polypropylene skeleton or random polypropylene skeleton, the content of the propylene component (content of the structural unit derived from propylene) in the polypropylene skeleton is, for example, 95 mol% or less and may be 90 mol% or less.

The content of the polypropylene skeleton in the acid-modified polypropylene resin relative to the total amount of the acid-modified polypropylene resin is, for example, 50% to 99% by mass. The content of the polypropylene skeleton in the acid-modified polypropylene resin relative to the total amount of the acid-modified polypropylene resin may be 50% by mass or more, 60% by mass or more, or 70% by mass or more, and may be 99% by mass or less, 95% by mass or less, or 90% by mass or less.

The acidic compound is, for example, a compound or a derivative thereof having an acidic group such as a carboxyl group, an acid anhydride group, or the like. The derivative is a compound obtained by modifying (for example, esterifying, amidating, or imidizing) the acidic group of a compound having an acidic group. The number of acidic groups in the acidic compound may be 1 or a plural (for example, 2). Examples of the acidic compound include unsaturated carboxylic acids, unsaturated carboxylic acid anhydrides, and derivatives thereof. Specific examples thereof include (meth)acrylic acid, maleic acid, maleic anhydride, fumaric acid, citraconic acid, citraconic anhydride, mesaconic acid, itaconic acid, itaconic anhydride, aconitic acid, aconitic anhydride, and nadic anhydride, and derivatives of these compounds. Examples of the derivatives include compounds each having at least one (meth)acryloyl group in its molecule, such as methyl (meth9acrylate, ethyl (meth)acrylate, and the like. In addition, "(meth)acrylic" represents acrylic or methacrylic. The same is applied to (meth)acrylate and (meth)acryloyl. The acidic compound is preferably a compound having an acidic group.

The acid modification degree (for example, graft weight) of the acid-modified polypropylene resin is, for example, 1% to 20% by mass. The acid modification degree of the acid-modified polypropylene resin may be 1% by mass or more or 3% by mass or more, and may be 20% by mass or less or 10% by mass or less. The acid modification degree and graft weight can be determined by an alkali titration method or Fourier transform infrared spectroscopy.

A method for acid modification is, for example, a method of graft modification of polypropylene. Specific examples thereof include a method (melting method) of reacting polypropylene by heat-melting at a temperature equal to or higher than the melting point in the presence of a radial reaction initiator, a method (solution method) of dissolving polypropylene in an organic solvent and then reacting it by heat-stirring in the presence of a radical reaction initiator, and the like. Examples of the radical reaction initiator include an organic peroxide-based compound, azonitriles, and the like.

The acid-modified polypropylene resin may be chlorinated one. The chlorination reaction can be performed by a known common method.

The weight-average molecular weight of the acid-modified polypropylene resin is, for example, 10,000 to 200,000. The weight-average molecular weight of the acid-modified polypropylene resin may be 10,000 or more, 15,000 or more, or 40,000 or more, and may be 200,000 or less, 150,000 or less, or 120,000 or less. The weigh-average molecular weight is a value measured by gel permeation chromatography (standard material: polystyrene).

The melting point (Tm₁) of the acid-modified polypropylene resin is, for example, 50°C to 150°C. When the melting point (Tm₁) of the acid-modified polypropylene resin is within the range described above, there is the tendency to obtain more excellent setting property and image fastness. The melting point (Tm₁) of the acid-modified polypropylene is preferably lower than the melting point of oxidized polyethylene wax. The melting point (Tm₁) is a value measured by a melting point apparatus according to JIS K 0064.

The acid-modified polypropylene resin has, for example, a particle shape. From the viewpoint of preventing clogging of an ink jet head, the average particle diameter of the particle-shape acid-modified polypropylene resin is, for example, 10 to 200 nm. The average particle diameter of the particle-shape acid-modified polypropylene resin may be 10 nm or more or 20 nm or more, and may be 200 nm or less or 170 nm or less. The average particle diameter is a d50 diameter a volume-based particle size distribution measured by a laser scattering method using a laser scattering particle diameter analyzer (for example, Microtrac).

The acid-modified polypropylene resin used is preferably one in a state of being dissolved or dispersed in a solvent and is more preferably one in an emulsion state of being dispersed in a solvent. The solvent is preferably an aqueous solvent and more preferably the same as the aqueous medium used as the solvent of the ink jet printing ink. When such a dispersion is used, the pH of the dispersion is, for example, 6 to 10 at a liquid temperature of 25°C from the viewpoint of making easy dispersion of the acid-modified polypropylene resin in the solvent and improving storage stability. In order to adjust the pH to fall within the range described above, the dispersion may contain a neutralizing agent, such as ammonia water, triethylamine, triethanolamine, dimethylaminoethanol, morpholine, or the like, or an inorganic base such as sodium hydroxide, potassium hydroxide, or the like.

The acid-modified polypropylene resins can be used alone or in combination or two or more.

A commercial product can also be used as the acid-modified polypropylene resin. Examples of preferred commercial products include Auroren (registered trademark) AE-301 and AE-502 manufactured by Nippon Paper Industries Co., Ltd.

In order to obtain a printed matter satisfying both the high optical density and excellent rub fastness even when printed on plain paper, the content of the binder including the acid-modified polypropylene resin relative to the total amount of the ink jet printing ink is preferably 3% by mass or less and may be 2.5% by mass or less or 2% by mass or less. In order to obtain a printed matter satisfying both the high optical density and excellent rub fastness even when printed on plain paper, the content of the binder including the acid-modified polypropylene resin relative to the total amount of the ink jet printing ink is preferably 0.2% by mass or more and may be 0.4% by mass or more or 0.75% by mass or more. From these viewpoints, the content of the binder relative to the total amount of the ink jet printing ink is preferably 0.2% to 3% by mass.

In the ink jet printing ink of the present invention obtained by the method described above, the mass ratio [dispersion (A)/dispersion (B)] between the dispersion (A) and the dispersion (B) is within a range of 1.5 to 9. The ink jet printing ink within the range described above has excellent storage stability and resolubility even at a high pigment concentration and can produce a printed matter having a high optical density and excellent rub fastness when used for printing on plain paper. The mass ratio [dispersion (A)/dispersion (B)] is preferably within a range of 1.25 to 5.0, and particularly preferably within a range of 1.2 to 2.0 in order to obtain an ink jet printing ink which has excellent storage stability and resolubility even at a high pigment concentration and can produce a printed matter having a high optical density and excellent rub fastness when used for printing on plain paper.

The ink jet printing ink used is preferably one containing 2% to 5% by mass and particularly preferably one containing 3% to 4.5% by mass of the dispersion (A) relative to the total amount of the ink jet printing ink in order to obtain an ink jet printing ink which has excellent storage stability and resolubility even at a high pigment concentration and can produce a printed matter having a high optical density and excellent rub fastness when used for printing on plain paper.

The ink jet printing ink used is preferably one containing 0.5% to 5.0% by mass and particularly preferably one containing 1.0% to 4.0% by mass of the dispersion (B) relative to the total amount of the ink jet printing ink in order to obtain an ink jet printing ink which has excellent storage stability and resolubility even at a high pigment concentration and can produce a printed matter having a high optical density and excellent rub fastness when used for printing on plain paper.

The ink jet printing ink used is preferably one containing 5% to 12% by mass and particularly preferably one containing 7.0% to 10.0% by mass of the pigment relative to the total amount of the ink jet printing ink in order to obtain an ink jet printing ink which has excellent storage stability and resolubility and can produce an excellent printed matter having a high optical density when used for printing on plain paper.

Examples of an ink jet printing system which can eject the ink jet printing ink produced by the method described above include continuous ejection types (a charge control type, a spray type, and the like), on-demand types (a piezo system, a thermal system, an electrostatic suction system, and the like), and the like. In particular, in order to obtain a printed matter causing little occurrence of a decrease in image quality due to ejection nozzle clogging or the like and suppressing the occurrence of streaks or the like, a printing method and a method for producing a printed mater are preferred, in which an ink jet printing method of a single-pass system using a line head, which is preferred for printing by a piezo-system ink jet printing method and generally easily causes a decrease in image quality due to ejection nozzle clogging or the like as compared with a multi-pass system (scan system) ink jet printing method is selected as the ink jet printing system and used in combination with the ink jet printing ink of the present invention.

### (Recording medium)

The ink jet printing ink of the present invention can produce an excellent printed matter having a high optical density when used for printing on plain paper.

Examples of plain paper include Canon Plain Paper (White, White Double-sided Thick, Business), EPSON Plain Paper (Epson Genuine Double-sided High-quality Plain Paper, KA4500BZ, High-quality Plain Paper, Epson Double-sided High-quality Plain Paper <recycled paper>), Plain Paper High-White, Elecom Plain Paper, NEXT-IJ (manufactured by Nippon Paper Industries Co., Ltd.), npi High-quality paper (manufactured by Nippon Paper Industries Co., Ltd.), ink jet paper matte paper, and the like.

### EXAMPLES

The present invention is described below based on examples.

A polymer (weight-average molecular weight: 8000, acid value: 150 mgKOH/g, glass transition point: 111°C) containing 77 parts by mass of styrene, 13 parts by mass of methacrylic acid, and 10 parts by mass of acrylic acid was used as dispersing resin for pigment A.

### (Preparation of dispersion (A-1))

In a planetary mixer (ACMO4LVTJ-B manufactured by Aicohsha Mfg. Co., Ltd.), 50 pats by mass of #2650 (carbon black, manufactured by Mitsubishi Chemical Corporation), 15 parts by mass of the dispersing resin for pigment A, 6.6 parts by mass of a 34 mass% aqueous potassium hydroxide solution, and 33 parts by mass of diethylene glycol were charged, and kneaded for 60 minutes at a jacket temperature of 60°C and a stirring blade rotational speed of 25 rpm (number of revolutions: 80 rpm), producing a kneaded material.

Next, the resultant kneaded material was added to a mixer (Healthy Mix manufactured by Zojirushi Corporation), and ion exchange water was added and then stirred for 20 minutes after tightly stopping, producing a dispersion (A-1) having a pigment concentration of 12% by mass and containing a dispersion (A-1) having a volume-average particle diameter of 41 nm.

### (Preparation of dispersion (A-2))

A dispersion (A-2) having a pigment concentration of 12% by mass and containing a dispersion (A-2) having a volume-average particle diameter of 53 nm was prepared by the same method as in Example 1 except that 50 parts by mass of #2300 (carbon black, manufactured by Mitsubishi Chemical Corporation) was used in place of #2650 (carbon black, manufactured by Mitsubishi Chemical Corporation).

### (Preparation of dispersion (A-3))

A dispersion (A-3) having a pigment concentration of 12% by mass and containing a dispersion (A-3) having a volume-average particle diameter of 72 nm was prepared by the same method as in Example 1 except that 50 parts by mass of #650B (carbon black, manufactured by Mitsubishi Chemical Corporation) was used in place of #2650 (carbon black, manufactured by Mitsubishi Chemical Corporation).

### (Preparation of dispersion (A-4))

A dispersion (A-4) having a pigment concentration of 12% by mass and containing a dispersion (A-4) having a volume-average particle diameter of 90 nm was prepared by the same method as in Example 1 except that 50 parts by mass of #750B (carbon black, manufactured by Mitsubishi Chemical Corporation) was used in place of #2650 (carbon black, manufactured by Mitsubishi Chemical Corporation).

### (Preparation of dispersion (A-5))

A dispersion (A-5) having a pigment concentration of 12% by mass and containing a dispersion (A-5) having a volume-average particle diameter of 120 nm was prepared by the same method as in Example 1 except that 50 parts by mass of #85 (carbon black, manufactured by Mitsubishi Chemical Corporation) was used in place of #2650 (carbon black, manufactured by Mitsubishi Chemical Corporation).

### (Preparation of self-dispersed pigment (b-1))

First, 100 parts by mass of NIPex90 (carbon black manufactured by Orion Engineered Carbons Co., Ltd.) was added to 4000 parts by mass of an aqueous sodium peroxodisulfate solution (concentration: 1.5 mol/L) and then oxidized by stirring under the conditions including a temperature of 85°C and a stirring rate of 0.12 rotations/s.

Next, the oxidized product was filtered. Next, a dispersion obtained by mixing the oxidized carbon black remaining on a filter with ion exchange water and sodium hydroxide was treated using ultrafiltration membrane AHP-1010 (manufactured by Asahi Kasei Corporation) and the oxidized carbon black remaining on the filtration membrane was dried, preparing a self-dispersed pigment (b-1) including carbon black having a carboxyl group introduced into the surface thereof.

### (Aqueous binder solution (preparation of aqueous styrene-acrylic acid resin solution X))

In a four-neck flask provided with a stirrer, a thermometer, a condenser, and a nitrogen inlet tube, 16 parts by mass of "Newcol 707SF" (manufactured by Nippon Nyukazai Co., Ltd., anionic emulsifier), 6.5 parts by mass of "Noigen TDS-200D" (manufactured by Daiichi Kogyo Seiyaku Co., Ltd., nonionic emulsifier), and 220 parts by mass of deionized water were charged and heated to 80°C in a nitrogen stream, and then an aqueous solution prepared by dissolving 0.8 parts by mass of ammonium persulfate in 16 parts by mass of deionized water was added. Further, a mixture containing 60 parts by mass of 2-ethylhexyl acrylate, 100 parts by mass of styrene, 27 parts by mass of methyl methacrylate, 3 parts by mass of acrylamide, and 6 parts by mass of methacrylic acid was dropped over 3 hours. After the completion of dropping, the resultant mixture was reacted for 2 hours, then cooled to 25°C, and neutralized with 1.5 parts by mass of 28 mass% ammonia water. Then, deionized water was added to adjust the non-volatile content to 40% by mass, producing an acrylic-based aqueous solution (x) having a glass transition temperature (Tg) of 35°C. The final solid content concentration of the acrylic resin aqueous solution (X) was 39% by mass.

### (Preparation of dispersion (B-1))

In a metal-made beaker, 15 parts by mass of the self-dispersed pigment (b-1), 85 parts by mass of ion exchange water, and 0.55 parts by mass of a 34 mass% aqueous potassium hydroxide solution were supplied and then stirred, preparing a mixture.

Next, the resultant mixture was ultrasonically dispersed by using an ultrasonic disperser described below. The time of ultrasonic treatment was 3 minutes. The energy applied to the mixture by the ultrasonic dispersion treatment was adjusted to 0.7 W/g per gram of the self-dispersed pigment (b-1).

### Ultrasonic disperser (UP200St manufactured by Hielscher Ltd.)

Maximum output: 200 W
Frequency: 20 KHz

Next, the dispersion obtained by the ultrasonic dispersion treatment was allowed to stand for 30 minutes. Then, the pigment concentration was adjusted by using ion exchange water, preparing a dispersion (B-1) having a pigment concentration of 20% by mass and containing the dispersion (B-1) having a volume-average particle diameter of 110 nm and dispersed in ion exchange water.

### (Preparation of self-dispersed pigment (b-2))

A self-dispersed pigment (b-2) was prepared by the same method as the method described above in "(preparation of self-dispersed pigment (b-1))" except that MA77 (carbon black manufactured by Mitsubishi Chemical Corporation) was used in place of NIPex90 (carbon black manufactured by Orion Engineered Carbons Co., Ltd.).

### (Preparation of dispersion (B-2))

A dispersion (B-2) having a pigment concentration of 20% by mass and containing a dispersion (B-2) having a volume-average particle diameter of 145 nm and dispersed in ion exchange water was prepared by the same method as the method described above in "Preparation of dispersion (B-1))" except that the self-dispersed pigment (b-2) was used in place of the self-dispersed pigment (b-1).

### (Preparation of self-dispersed pigment (b-3))

A self-dispersed pigment (b-3) was prepared by the same method as the method described above in "(preparation of self-dispersed pigment (b-1))" except that NIPex150 (carbon black manufactured by Orion Engineered Carbons Co., Ltd.) was used in place of NIPex90 (carbon black manufactured by Orion Engineered Carbons Co., Ltd.).

### (Preparation of dispersion (B-3))

A dispersion (B-3) having a pigment concentration of 20% by mass and containing a dispersion (B-3) having a volume-average particle diameter of 170 nm and dispersed in ion exchange water was prepared by the same method as the method described above in "Preparation of dispersion (B-1))" except that the self-dispersed pigment (b-3) was used in place of the self-dispersed pigment (b-1).

### (Preparation of self-dispersed pigment (b-4))

A self-dispersed pigment (b-4) was prepared by the same method as the method described above in "(preparation of self-dispersed pigment (b-1))" except that MA230 (carbon black manufactured by Mitsubishi Chemical Corporation) was used in place of NIPex90 (carbon black manufactured by Orion Engineered Carbons Co., Ltd.).

### (Preparation of dispersion (B-4))

A dispersion (B-4) having a pigment concentration of 20% by mass and containing a dispersion (B-4) having a volume-average particle diameter of 208 nm and dispersed in ion exchange water was prepared by the same method as the method described above in "Preparation of dispersion (B-1))" except that the self-dispersed pigment (b-4) was used in place of the self-dispersed pigment (b-1).

### (Preparation of self-dispersed pigment (b-5))

A self-dispersed pigment (b-5) was prepared by the same method as the method described above in "(preparation of self-dispersed pigment (b-1))" except that MA14 (carbon black manufactured by Mitsubishi Chemical Corporation) was used in place of NIPex90 (carbon black manufactured by Orion Engineered Carbons Co., Ltd.).

### (Preparation of dispersion (B-5))

A dispersion (B-5) having a pigment concentration of 20% by mass and containing a dispersion (B-5) having a volume-average particle diameter of 223 nm and dispersed in ion exchange water was prepared by the same method as the method described above in "Preparation of dispersion (B-1))" except that the self-dispersed pigment (b-5) was used in place of the self-dispersed pigment (b-1).

### (EXAMPLE 1)

First, 60 parts by mass of the dispersion (A-3) and 40 parts by mass of the dispersion (B-3) were mixed, stirred for 10 minutes by a stirrer, and then filtered by a filter of 1.2 µm (manufactured by Pall Corporation), producing an aqueous pigment dispersion having a pigment concentration of 20% by mass.

The resultant aqueous pigment dispersion was mixed with 10 parts by mass of propylene glycol, 10 parts by mass of purified glycerin, and 1.0 parts by mass of Surfynol 420 (manufactured by EVONIK Co., Ltd., and ion exchange water was added as a balance so that the pigment concentration and the binder concentration were as described in Table 1, producing 100 parts by mass of an ink jet printing ink.

### (EXAMPLE 2)

An aqueous pigment dispersion and an ink jet printing ink were produced by the same method as in Example 1 except that 90 parts by mass of the dispersion (A-3) and 10 parts by mass of the dispersion (B-3) were used in place of 60 parts by mass of the dispersion (A-3) and 40 parts by mass of the dispersion (B-3).

### (EXAMPLE 3)

An aqueous pigment dispersion and an ink jet printing ink were produced by the same method as in Example 1 except that 70 parts by mass of the dispersion (A-3) and 30 parts by mass of the dispersion (B-3) were used in place of 60 parts by mass of the dispersion (A-3) and 40 parts by mass of the dispersion (B-3).

### (EXAMPLE 4)

An aqueous pigment dispersion and an ink jet printing ink were produced by the same method as in Example 1 except that 70 parts by mass of the dispersion (A-3) and 30 parts by mass of the dispersion (B-4) were used in place of 60 parts by mass of the dispersion (A-3) and 40 parts by mass of the dispersion (B-3).

### (EXAMPLE 5)

An aqueous pigment dispersion and an ink jet printing ink were produced by the same method as in Example 1 except that 70 parts by mass of the dispersion (A-4) and 30 parts by mass of the dispersion (B-3) were used in place of 60 parts by mass of the dispersion (A-3) and 40 parts by mass of the dispersion (B-3).

### (EXAMPLE 6)

An aqueous pigment dispersion and an ink jet printing ink were produced by the same method as in Example 1 except that 70 parts by mass of the dispersion (A-4) and 30 parts by mass of the dispersion (B-4) were used in place of 60 parts by mass of the dispersion (A-3) and 40 parts by mass of the dispersion (B-3).

### (EXAMPLE 7)

An aqueous pigment dispersion and an ink jet printing ink were produced by the same method as in Example 1 except that 70 parts by mass of the dispersion (A-4) and 30 parts by mass of the dispersion (B-4) were used in place of 60 parts by mass of the dispersion (A-3) and 40 parts by mass of the dispersion (B-3).

### (EXAMPLE 8)

An aqueous pigment dispersion and an ink jet printing ink were produced by the same method as in Example 1 except that 70 parts by mass of the dispersion (A-3) and 30 parts by mass of the dispersion (B-3) were used in place of 60 parts by mass of the dispersion (A-3) and 40 parts by mass of the dispersion (B-3).

### (EXAMPLE 9)

An aqueous pigment dispersion and an ink jet printing ink were produced by the same method as in Example 1 except that 70 parts by mass of the dispersion (A-3) and 30 parts by mass of the dispersion (B-3) were used in place of 60 parts by mass of the dispersion (A-3) and 40 parts by mass of the dispersion (B-3).

### (EXAMPLE 10)

An aqueous pigment dispersion and an ink jet printing ink were produced by the same method as in Example 1 except that 70 parts by mass of the dispersion (A-3) and 30 parts by mass of the dispersion (B-3) were used in place of 60 parts by mass of the dispersion (A-3) and 40 parts by mass of the dispersion (B-3).

### (COMPARATIVE EXAMPLE 1)

An aqueous pigment dispersion and an ink jet printing ink were produced by the same method as in Example 1 except that 50 parts by mass of the dispersion (A-3) and 50 parts by mass of the dispersion (B-3) were used in place of 60 parts by mass of the dispersion (A-3) and 40 parts by mass of the dispersion (B-3).

### (COMPARATIVE EXAMPLE 2)

An aqueous pigment dispersion and an ink jet printing ink were produced by the same method as in Example 1 except that 95 parts by mass of the dispersion (A-3) and 5 parts by mass of the dispersion (B-3) were used in place of 60 parts by mass of the dispersion (A-3) and 40 parts by mass of the dispersion (B-3).

### (COMPARATIVE EXAMPLES 3 to 6)

An aqueous pigment dispersion and an ink jet printing ink were produced by the same method as in Example 1 except that 70 parts by mass of the dispersion (A-3) and 30 parts by mass of the dispersion (B-3) were used in place of 60 parts by mass of the dispersion (A-3) and 40 parts by mass of the dispersion (B-3).

### (COMPARATIVE EXAMPLE 7)

An aqueous pigment dispersion and an ink jet printing ink were produced by the same method as in Example 1 except that 70 parts by mass of the dispersion (A-1) and 30 parts by mass of the dispersion (B-3) were used in place of 60 parts by mass of the dispersion (A-3) and 40 parts by mass of the dispersion (B-3).

### (COMPARATIVE EXAMPLE 8)

An aqueous pigment dispersion and an ink jet printing ink were produced by the same method as in Example 1 except that 70 parts by mass of the dispersion (A-2) and 30 parts by mass of the dispersion (B-3) were used in place of 60 parts by mass of the dispersion (A-3) and 40 parts by mass of the dispersion (B-3).

### (COMPARATIVE EXAMPLE 9)

An aqueous pigment dispersion and an ink jet printing ink were produced by the same method as in Example 1 except that 70 parts by mass of the dispersion (A-5) and 30 parts by mass of the dispersion (B-3) were used in place of 60 parts by mass of the dispersion (A-3) and 40 parts by mass of the dispersion (B-3).

### (COMPARATIVE EXAMPLE 10)

An aqueous pigment dispersion and an ink jet printing ink were produced by the same method as in Example 1 except that 70 parts by mass of the dispersion (A-3) and 30 parts by mass of the dispersion (B-1) were used in place of 60 parts by mass of the dispersion (A-3) and 40 parts by mass of the dispersion (B-3).

### (COMPARATIVE EXAMPLE 11)

An aqueous pigment dispersion and an ink jet printing ink were produced by the same method as in Example 1 except that 70 parts by mass of the dispersion (A-3) and 30 parts by mass of the dispersion (B-2) were used in place of 60 parts by mass of the dispersion (A-3) and 40 parts by mass of the dispersion (B-3).

### (COMPARATIVE EXAMPLE 12)

An aqueous pigment dispersion and an ink jet printing ink were produced by the same method as in Example 1 except that 70 parts by mass of the dispersion (A-3) and 30 parts by mass of the dispersion (B-5) were used in place of 60 parts by mass of the dispersion (A-3) and 40 parts by mass of the dispersion (B-3).

### <Method for measuring primary particle diameter of pigment>

The primary particle diameters D (nm) of the pigment (a) and the self-dispersed pigment (b) were determined as follows. First, an aqueous pigment composition at a pigment concentration of 1% by mass containing the pigment (a) or the self-dispersed pigment (b) and ion exchange water was dropped on a mesh with a collodion film and then dried. The surface of the dried material was observed using STEM (scanning transmission electron microscope) (JSM-7500FA manufactured by JEOL Ltd.). The acceleration voltage was 30 kV, and the observation magnification was set to be magnification for easy observation according to the sample to be observed within a range of 5000 times to 200,000 times. Based on the image observed by the method described above, the particle diameter (primary particle diameter) of the minimum unit forming the pigment (a) and the self-dispersed pigment (b) was measured at 100 points and averaged to obtain a value as the primary particle diameter D (nm) described in the present invention.

### <Method for measuring volume-average particle diameter of dispersion (A) and dispersion (B)>

Each of the dispersions (A-1) to (A-5) and the dispersion (B-1) to the dispersion (B-5) used for producing the ink jet printing ink was diluted 10000 time with ion exchange water, preparing a sample.

Next, 4 ml of the sample was placed in a cell, and the volume-average particle diameter (MV) was measured by detecting laser scattered light in an environment at 25°C using Nanotrac particle size distribution analyzer "UPA150" manufactured by Microtrac BEL Corporation.

The volume-average particle diameter was measured three times per sample and an average was calculated. The average value was rounded off to the nearest whole number, obtaining a value as a volume-average particle diameter value (unit: nm) as a matter specifying the present invention. In this case, the measurement conditions were: solvent name: water, solvent refractive index: 1.333, particle transmissivity: absorption, density: 1.45, particle shape: non-sphere.

### <Evaluation of storage stability based on viscosity change>

The viscosity⁰ immediately after the production of the ink jet printing ink obtained in each of the examples and the comparative examples was measured by using Viscometer TV-20 (manufactured by Toki Sangyo Co., Ltd.) under the conditions of 25°C and 50 to 100 rpm.

Next, the ink jet printing ink was sealed in a polyethylene container and stored for 28 days in an atmosphere at 60°C. Next, the viscosity¹ of the ink jet printing ink after storage was measured by using Viscometer TV-20 (manufactured by Toki Sangyo Co., Ltd.) under the conditions of 25°C and 50 to 100 rpm.

A rate of change in viscosity was calculated based on the viscosity⁰ and viscosity¹ of the ink jet printing ink and the formula [Rate of change (%) = (viscosity¹/viscosity⁰) × 100].
A: The rate of change in viscosity of the ink jet printing ink is less than 1.2.
B: The rate of change in viscosity of the ink jet printing ink is 1.2 or more and less than 1.7.
C: The rate of change in viscosity of the ink jet printing ink is 1.7 or more.

### <Printing>

The ink jet printing ink produced by the method described above was allowed to stand for 24 hours after production. Then, the ink jet printing ink was filled in a cartridge of a commercial ink jet printer, and a printing pattern was printed on plain paper (plain paper High-White) at an image density set to 100%.

### <Evaluation of optical density (OD) on plain paper>

The plain paper printed with the ink jet printing ink was allowed to stand for 1 day in an environment at room temperature, producing a printed matter.

Next, the optical density (OD) of the printed portion of the printed matter was measured by using a spectrophotometer "Gretag Macbeth Spectro Scan Transmission" (X-Rite Co., Ltd.) under the conditions including D65 light source, a no-filter state, and a viewing angle of 2°, and the optical density was evaluated according evaluation criteria below.

### Evaluation criteria

A: 1.30 or more
B: 1.10 or more and less than 1.30
C: Less than 1.10

### [Resolubility]

In the schale, 100 µL of the ink jet printing ink was dropped and allowed to stand for 30 minutes in an environment of 60°C. Next, a model ink (propylene glycol: 10% by mass, glycerin: 10% by mass, Surfynol 420: 0.1% by mass, water: 79.9% by mass) was silently poured in the schale and allowed to stand for 30 minutes in an environment of 60°C. Then, when the contents in the schale were stirred, the solubility of the contents was visually evaluated according to evaluation criteria below.

### Evaluation criteria

A: The contents become substantially uniform black and no pigment lump is observed.
B: A pigment lump is observed in an undispersed portion, but the solution in the schale becomes black.
C: The pigment remains as a lump, and the solution color around the pigment dispersion remains transparent.

### [Evaluation of rub fastness]

Each of the aqueous inks obtained in the examples and the comparative examples was filled in ink jet head KJ4B-YH manufactured by Kyocera Corporation, and the supply pressure was adjusted by setting the water head difference of an ink sub-tank from a head nozzle plate surface to +35 cm and the negative pressure to -5.0 kPa. Also, the distance (gap) from the surface (x) having an ink ejection port of the ink jet head to the position (y) of crossing of an assumed line perpendicular to the surface (x) and a recording medium was set to 2 mm. A corrugated board having a white colored layer and a thickness of about 2 mm was used as the recording medium. The driving conditions of the head were set to the standard voltage and standard temperature for the ink jet head, and 100% solid printing was performed with a droplet size set to 18 pL, producing a printed matter.

Next, "Bencot AP-2" manufactured by Ozu Corporation was fixed to a head portion of "Rubbing Tester" manufactured by Taihei Rikagaku Kogyo and soaked with 100 µL of ion exchange water, and then the printing surface of the printed matter was rubbed 10 times with a load of 500 g.

Next, the rubbed surface of the printed matter was read by a scanner, and the ratio (color residual rate) of a surface having a similar color to the unrubbed surface relative to the rubbed area was analyzed by an image analysis software "Image J".
A: The color residual rate of the printed matter is 60% or more.
B: The color residual rate of the printed matter is 30% or more and less than 60%.
C: The color residual rate of the printed matter is less than 30%.

**[Table 1]**

| Dispersion (A)/nm | | | | | Dispersion (B)/nm | | | | |
|---|---|---|---|---|---|---|---|---|---|
| A-1 | A-2 | A-3 | A-4 | A-5 | B-1 | B-2 | B-3 | B-4 | B-5 |
| 41 | 53 | 72 | 90 | 120 | 110 | 145 | 170 | 208 | 223 |

**[Table 2]**

| | Example 1 | Example 2 | Example 3 | Example 4 | Example 5 |
|---|---|---|---|---|---|
| Dispersion (A) | A-3 | A-3 | A-3 | A-3 | A-4 |
| Dispersion (B) | B-3 | B-3 | B-3 | B-4 | B-3 |
| Pigment concentration [% by mass] | 9 | 9 | 9 | 9 | 9 |
| Binder [% by mass] | 2 | 2 | 2 | 2 | 2 |
| Dispersion (A) contained in inkjet printing ink [parts by mass] | 60 | 90 | 70 | 70 | 70 |
| Dispersion (B) contained in inkjet printing ink [parts by mass] | 40 | 10 | 30 | 30 | 30 |
| Volume-average particle diameter (nm) of dispersion contained in inkjet printing ink | 121 | 85 | 105 | 111 | 115 |
| Storage stability | B | A | A | A | A |
| Resolubility | A | A | A | A | A |
| Rub fastness | B | A | B | B | B |
| Optical desnity (plain paper) | A | B | A | A | A |

**[Table 3]**

| | Example 6 | Example 7 | Example 8 | Example 9 | Example 10 |
|---|---|---|---|---|---|
| Dispersion (A) | A-4 | A-4 | A-3 | A-3 | A-3 |
| Dispersion (B) | B-4 | B-4 | B-3 | B-3 | B-3 |
| Pigment concentration [% by mass] | 9 | 9 | 9 | 12 | 6 |
| Binder [% by mass] | 2 | 3 | 0.4 | 2 | 2 |
| Dispersion (A) contained in inkjet printing ink [parts by mass] | 70 | 70 | 70 | 70 | 70 |
| Dispersion (B) contained in inkjet printing ink [parts by mass] | 30 | 30 | 30 | 30 | 30 |
| Volume-average particle diameter (nm) of dispersion contained in inkjet printing ink | 133 | 133 | 103 | 105 | 102 |
| Storage stability | A | B | A | B | A |
| Resolubility | A | B | A | B | A |
| Rub fastness | B | A | B | B | A |
| Optical desnity (plain paper) | A | A | A | A | B |

**[Table 4]**

| | Comparative Example 1 | Comparative Example 2 | Comparative Example 3 | Comparative Example 4 | Comparative Example 5 |
|---|---|---|---|---|---|
| Dispersion (A) | A-3 | A-3 | A-3 | A-3 | A-3 |
| Dispersion (B) | B-3 | B-3 | B-3 | B-3 | B-3 |
| Pigment concentration [% by mass] | 6 | 6 | 5 | 14 | 9 |
| Binder [% by mass] | 2 | 2 | 2 | 2 | 5 |
| Dispersion (A) contained in ink jet printing ink [parts by mass] | 50 | 95 | 70 | 70 | 70 |
| Dispersion (B) contained in ink jet printing ink [parts by mass] | 50 | 5 | 30 | 30 | 30 |
| Volume-average particle diameter (nm) of dispersion contained in inkjet printing ink | 122 | 81 | 102 | 108 | 107 |
| Storage stability | C | A | A | C | B |
| Resolubility | B | B | A | C | C |
| Rub fastness | C | A | A | C | A |
| Optical desnity (plain paper) | A | C | C | A | B |

**[Table 5]**

| | Comparative Example 6 | Comparative Example 7 | Comparative Example 8 | Comparative Example 9 | Comparative Example 10 |
|---|---|---|---|---|---|
| Dispersion (A) | A-3 | A-1 | A-2 | A-5 | A-3 |
| Dispersion (B) | B-3 | B-3 | B-3 | B-3 | B-1 |
| Pigment concentration [% by mass] | 9 | 6 | 6 | 6 | 6 |
| Binder [% by mass] | 0.1 | 2 | 2 | 2 | 2 |
| Dispersion (A) contained in ink jet printing ink [parts by mass] | 70 | 70 | 70 | 70 | 70 |
| Dispersion (B) contained in ink jet printing ink [parts by mass] | 30 | 30 | 30 | 30 | 30 |
| Volume-average particle diameter (nm) of dispersion contained in inkjet printing ink | 101 | 78 | 86 | 136 | 83 |
| Storage stability | A | B | B | C | A |
| Resolubility | A | A | A | C | A |
| Rub fastness | C | A | A | B | A |
| Optical desnity (plain paper) | A | C | C | A | C |

**[Table 6]**

| | Comparative Example 11 | Comparative Example 12 |
|---|---|---|
| Dispersion (A) | A-3 | A-3 |
| Dispersion (B) | B-2 | B-5 |
| Pigment concentration [% by mass] | 6 | 6 |
| Binder [% by mass] | 2 | 2 |
| Dispersion (A) contained in inkjet printing ink [parts by mass] | 70 | 70 |
| Dispersion (B) contained in inkjet printing ink [parts by mass] | 30 | 30 |
| Volume-average particle diameter (nm) of dispersion contained in ink jet printing ink | 95 | 121 |
| Storage stability | A | C |
| Resolubility | A | C |
| Rub fastness | A | B |
| Optical desnity (plain paper) | C | A |

## Claims

1. An ink jet printing ink comprising an aqueous medium, a dispersion (A), and a dispersion (B),
wherein the dispersion (A) contains a pigment (a) and a dispersing resin for pigment, and the volume-average particle diameter of the dispersion (A) is 70 nm or more and less than 90 nm;
the dispersion (B) contains a self-dispersed pigment (b), and the volume-average particle diameter of the dispersion (B) is 160 nm or more and 210 nm or less; and
the mass ratio [dispersion (A)/dispersion (B)] between the dispersion (A) and the dispersion (B) is 1.5 to 9.

2. The ink jet printing ink according to Claim 1, wherein the pigment concentration is 5% by mass to 12% by mass.

3. The ink jet printing ink according to Claim 1 or 2, further comprising a binder,
wherein the content of the binder relative to the total amount of the ink jet printing ink is within a range of 0.4% to 3% by mass; and
the pigment (a) and the self-dispersed pigment (b) contain carbon black.

4. A method for producing a printed matter, comprising printing the ink according to Claim 1 or 2 on plain paper by a piezo-system ink jet printing method.
